# EUROPEAN PATENT SPECIFICATION

(11) **EP 1 923 882 B1**
(45) Date of publication and mention of the grant of the patent: **06.10.2010**
(21) Application number: 07120728.6
(22) Date of filing: 14.11.2007
(51) Int. Cl.: G11B 7/26, B65G 33/06

(54) **Disk substrate conveying mechanism and recording medium disk**
Plattensubstratfördermechanismus und aufzeichnende Zwischenplatte
Mécanisme de transport d'un substrat de disque et support d'enregistrement

(30) Priority: 15.11.2006 JP 2006309516; 03.07.2007 JP 2007175091
(43) Date of publication of application: 21.05.2008
(73) Proprietor: Ricoh Company, Ltd., Tokyo 143-8555 (JP); Origin Electric Company Ltd, Tokyo 171-8555 (JP)
(72) Inventor: Koga, Noboru, Tokyo (JP); Jin, Godai c/o Origin Electric Co. Ltd., Tokyo 171-8555 (JP)
(74) Representative: Barz, Peter

(56) References cited:
- EP-A- 1 100 080
- NL-A- 8 702 462
- US-A1- 2005 048 250
- US-A1- 2007 124 745

## Description

### BACKGROUND OF THE INVENTION

### 1. Field of the Invention

The present invention relates to an optical information recording medium such as an optical disk, a disk substrate conveying mechanism used for manufacturing a magnetic recording medium, and a method of manufacturing a recording medium disk.

### 2. Description of the Related Art

There are optical disks onto which laser wavelength light is irradiated for reading recorded information, writing in information, or deleting information. Optical disks that are fabricated by adhering together two optically-transparent substrates are manufactured and available in the marketplace. Examples are a DVD and a laser disk. This type of optical disk is composed of two optically-transparent substrates, a reflective layer, an adhesive layer, and a printing layer. The optically-transparent substrates are made of PC (polycarbonate), PMMA (acrylic resin), or the like. The reflective layer is made of Au, Ag, Al alloy, or the like. An adhesive such as an ultraviolet curing adhesive is used.

The radical UV method is the most prevalent conventional method for adhering together optical disks. Specifically, in this method, a dispenser is used to drop a radical UV adhesive in a concentric circle on an optical disk information substrate (corresponding to a single plate into which information is to be recorded, including a recording layer and a reflective layer). After a cover substrate (a transparent single plate to act as a cover) is placed on the optical disk information substrate, the substrates are rotated at a predetermined rotational frequency and for a predetermined amount of time in order to spin off excessive amounts of the adhesive. Subsequently, ultraviolet rays are irradiated to cure the UV adhesive. Accordingly, a laminated-type optical recording medium is manufactured.

A description is given of an example of a conventional radical UV method for laminating disks.

In this example, two disks are adhered together, where each disk includes two or more layers, such as a double-layer playback disk or a double-layer recording disk. As a matter of convenience, the substrate (disk) to be on the bottom and to receive light is referred to as La and the substrate to be on the top is referred to as Lb.

The adhering process is usually performed by irradiating UV rays from above to cure the ultraviolet curing adhesive between the La substrate and the Lb substrate. Therefore, the disks are conveyed in such a manner that the La substrate is facing upward, as light can pass through the La substrate and reach the adhesive. Specifically, the Lb substrate is first placed on a stage (spin table) of a rotational application device with the side on which a barrier film is sputtered (i.e., the side for receiving light) facing upward While the stage is rotated at a rotational speed of several tens rpm, a dispenser is used to drop an ultraviolet curing adhesive (with a viscosity of approximately 500 cp) in a concentric circle along a circumference approximately 30 mm away from the center of the Lb substrate. Next, the La substrate is superposed on the Lb substrate, with the side for receiving light facing upward. Then, the stage is rotated at a rotational speed of several hundred to several thousand rpm, so that the ultraviolet curing resin extends to the edge of the substrates. Then, the superposed substrates are conveyed to a light irradiation stage. At the light irradiation stage, ultraviolet rays are irradiated onto the substrates to cure the adhesive. Accordingly, a laminated-type optical disk is manufactured.

If there is a burr (a portion that has been unintentionally extruded from a gap in a die during a molding process) standing along the outer peripheral edge on the side of the substrate La and/or Lb facing the other substrate, the burr will abut the other substrate, or two opposite burrs will abut each other. As a result, bubbles will be generated in the adhesive layer.

Particularly, in the case of adhering together two multi-layer disks such as a double-layer playback disk or a double-layer recording disk, the thickness of the adhesive layer is restricted. Therefore, the height of the burr is to be made small on the substrates to be adhered together. In the case of adhering together single-layer disks (combination of active disk with layers and clear substrate disk), there are no restrictions in the thickness of the adhesive layer. Therefore, the adhesive layer can be made thick enough so that the burr does not abut the opposite substrate, such as in a range of 80 µm through 120 µm. However, in the case of adhering together two double-layer disks, restrictions are specified in the thickness of the adhesive layer. Specifically, the thickness of the adhesive layer is required to be as thin as 45 µm through 55 µm in the case of DVD+R DL disks and 22 µm through 28 µm in the case of HD-R DL disks, which are calculated based on the focal length between the La substrate and the Lb substrate. A burr on either one of the substrates La or Lb is not to exceed the specified adhesive layer thickness, or burrs on both of the substrates La and Lb are not to abut each other. Accordingly, the total height of a burr on the substrate La and a burr on the substrate Lb is not to exceed the specified adhesive layer thickness. Specifically, in the case of the aforementioned double-layer DVD+R DL disks, if the total height of a burr on the substrate La and a burr on the substrate Lb exceeds 40 µm, the standing burrs will abut each other. As a result, the machine properties of the disks adhered together will be degraded and bubbles will be generated in the adhesive layer.

After the adhesive liquid used for adhering the disks is applied, excessive adhesive liquid is spun off as the disks are rotated on the spin table, and the adhesive liquid is turned into a thin film as the disks are continuously rotated. However, if there are standing burrs abutting each other at the outer peripheral edges of the disks, the distance between the substrates cannot be reduced any more than the height of the standing burrs. Hence, the liquid extending as a thin film from the inner peripheral side is not sufficient for filling the open space at the outer peripheral edges between the substrates. Accordingly, bubbles will be generated in the adhesive liquid, which are large enough to be easily visually observed, each bubble having a diameter falling in a range of 50 µm through 1.5 mm.

The reason why the above-described standing burr is formed is described below. A disk substrate is molded with the use of a die that has a stamper attached thereto. In order to prevent the stamper from being deformed, it is necessary to provide a certain-sized clearance between the stamper and the cavity ring. The material used for forming the disk enters this clearance. As a result, a circular burr (horizontal burr) is formed extending outward in the radial direction along the outer peripheral edge, where the stamper side of the disk substrate (the side to be adhered to another disk) meets the outer peripheral edge face.

There is a mechanism for sending ahead equally spaced-apart disk substrates arranged in an upright manner at a predetermined speed by screw-conveyance, as described in Patent Document 1 and as illustrated in FIG. 4 of Patent Document 2. Such a mechanism is employed in a cooling process performed after molding the disk substrate or in an annealing process after dying the disk substrate. If a conventional DVD+/-R DL device equipped with such a mechanism is used for producing disks, the height of a burr on a disk will differ significantly before and after the disk is screw-conveyed. This is because no measures are taken with respect to the burr at the outer periphery of the disk that stands on the stamper side (the side to be adhered to another disk) after the disk is screw-conveyed. Specifically, a horizontal burr, which extends outward in the radial direction along the outer peripheral edge of the disk substrate on the stamper side, is caused to stand up on (be folded toward) the stamper side by the time the conveying operation is completed. Consequently, a tall burr is created on the disk substrate. At the initial stage of cooling the mold, the temperature of the substrate is still in a range of around 110 °C through 130 °C, which corresponds to the temperature of the die. In the case of the annealing process, the substrate is exposed to heat of 80 °C through 100 °C. Under such temperatures, the substrate and the burr portion are soft, and therefore, if a receiving screw revolving operation is performed with a surface facing the burr, the burr will easily stand up. This phenomenon occurs particularly when the disk substrate is conveyed while the disk substrate is arranged in such a manner that its stamper side is on the front in the conveyance direction (details are given below).
Patent Document 1: Japanese Patent No. 3625279
Patent Document 2: Japanese Laid-Open Patent Application No. 2002-245692

EP-A2-1100080 describes a method of manufacturing an information recording medium comprising the steps of simultaneously injection-molding two substrates, forming a dye recording layer on one of said substrates and thereafter bonding said two substrates to each other which method may also include the step of supporting the injected molded substrates with surfaces thereof oriented substantially vertically on a feed screw mechanism.

### SUMMARY OF THE INVENTION

The present invention provides a disk substrate conveying mechanism and a method of manufacturing a recording medium disk in which one or more of the above-described disadvantages are eliminated.

A preferred embodiment of the present invention provides a disk substrate conveying mechanism and a method of manufacturing a recording medium disk, in which a standing burr is mitigated, which standing burr causes bubbles at the outer periphery of a disk.

An embodiment of the present invention provides a disk substrate conveying mechanism including a plurality of screw shafts each including a guiding groove provided in a helical manner, which guiding grooves are configured to support an outer peripheral edge of a disk substrate molded with a die, wherein the screw shafts are axially rotated to convey the disk substrate in a conveying direction; and each of the guiding grooves includes a front side wall at the front of the guiding groove in the conveying direction, a back side wall at the back of the guiding groove in the conveying direction, and a base face that is tilted in such a manner that the guiding groove becomes deeper gradually from the back toward the front in the conveying direction.

An embodiment of the present invention provides a disk substrate conveying mechanism including a plurality of screw shafts each including a guiding groove provided in a helical manner, which guiding grooves are configured to support an outer peripheral edge of a disk substrate molded with a die, wherein the screw shafts are axially rotated to convey the disk substrate in a conveying direction; and each of the guiding grooves includes a front side wall at a front of the guiding groove in the conveying direction, a back side wall at a back of the guiding groove in the conveying direction, and a base face that includes a recessed part at a front edge of the base face in the conveying direction.

An embodiment of the present invention provides a disk substrate conveying mechanism including a plurality of screw shafts each including a guiding groove provided in a helical manner, which guiding grooves are configured to support an outer peripheral edge of a disk substrate molded with a die, wherein the screw shafts are axially rotated to convey the disk substrate in a conveying direction; and each of the guiding grooves includes a front side wall at a front of the guiding groove in the conveying direction, a back side wall at a back of the guiding groove in the conveying direction, and a base face that is tilted in such a manner that the guiding groove becomes deeper gradually from the front toward the back in the conveying direction.

According to one embodiment of the present invention, a disk substrate conveying mechanism and a recording medium disk are provided, in which a standing burr is mitigated.

### BRIEF DESCRIPTION OF THE DRAWINGS

Other objects, features and advantages of the present invention will become more apparent from the following detailed description when read in conjunction with the accompanying drawings, in which:
FIG. 1 is a schematic diagram of an optical disk production line employing a disk substrate conveying mechanism according to an embodiment of the present invention;
FIGS. 2A and 2B illustrate a mechanism for transferring a disk substrate from a molding machine to a disk substrate cooling device in the optical disk production line shown in FIG. 1;
FIGS. 3A and 3B illustrate a partial configuration of a disk substrate conveying mechanism according to an embodiment of the present invention;
FIGS. 4A and 4B illustrate a disk substrate heat-treating device according to an embodiment of the present invention;
FIG. 5 is a first schematic diagram of the disk substrate conveying mechanism included in the disk substrate heat-treating device shown in FIGS. 4A and 4B;
FIG. 6 is a second schematic diagram of the disk substrate conveying mechanism included in the disk substrate heat-treating device shown in FIGS. 4A and 4B;
FIG. 7 is a sectional view of a die used for molding a disk substrate;
FIG. 8 is a first sectional view of a disk substrate and a guiding groove in a conventional disk substrate conveying mechanism;
FIG. 9 is a second sectional view of a disk substrate and a guiding groove in a conventional disk substrate conveying mechanism;
FIG. 10 is a diagram indicating positions for measuring the burr height on a stamper side of a disk substrate (the side to be adhered to another disk);
FIG. 11 is a sectional view of a disk substrate and a guiding groove of conveyance conditions 1 and 3 in experiment example 2;
FIG. 12 is a sectional view of a disk substrate and a guiding groove of conveyance condition 2 in experiment example 2;
FIG. 13 is a diagram indicating positions for measuring the burr height along a circumference of the disk substrate in experiment example 2;
FIG. 14 is a sectional view (1) of a disk substrate and a guiding groove of a disk substrate conveying mechanism according to an embodiment of the present invention;
FIG. 15 is a sectional view (2) of a disk substrate and a guiding groove of a disk substrate conveying mechanism according to an embodiment of the present invention;
FIG. 16 is a chart including a sectional view (3) of a disk substrate and a guiding groove of a disk substrate conveying mechanism according to an embodiment of the present invention;
FIG. 17 is a sectional view (4) of a disk substrate and a guiding groove of a disk substrate conveying mechanism according to an embodiment of the present invention;
FIG. 18 is a chart including a sectional view (5) of a disk substrate and a guiding groove of a disk substrate conveying mechanism according to an embodiment of the present invention; and
FIG. 19 indicates burr mitigating effects by comparing the burr heights on a substrate before and after an annealing process when using a disk substrate conveying mechanism according to practical example 4.

### DETAILED DESCRIPTION OF THE PREFERRED EMBODIMENTS

A description is given, with reference to the accompanying drawings, of an embodiment of the present invention.

The following describes a disk substrate conveying mechanism and a device employing the disk substrate conveying mechanism.

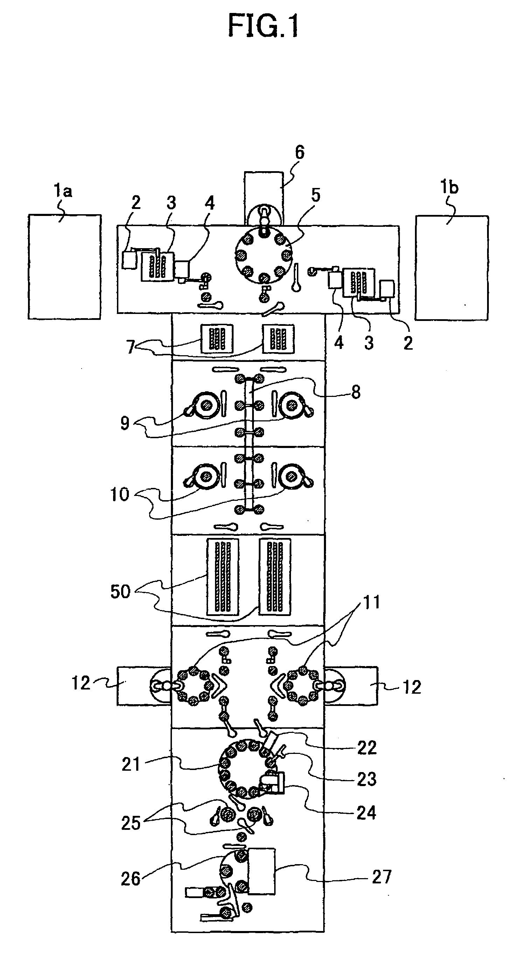

FIG. 1 is a schematic diagram of an integrated production line for manufacturing optical disks, employing the disk substrate conveying mechanism according to an embodiment of the present invention.

In FIG. 1, 1a and 1b denote molding machines; the molding machine 1a molds a disk substrate L0 and the molding machine 1b molds a disk substrate L1. Each of the molded disk substrates L0, L1 is transferred to a disk substrate cooling device 3 by a transferring unit 2. The disk substrate cooling device 3 is for cooling down a hot disk substrate L0, L1, which has just been molded, to room temperature. The disk substrate cooling device 3 employs the disk substrate conveying mechanism according to an embodiment of the present invention, and conveys the disk substrate L0, L1 arranged in an upright manner. Details are described below.

Among the two disk substrates L0, L1 cooled by the corresponding disk substrate cooling device 3, the disk substrate L0 is transferred to an aging unit 7, and the disk substrate L1 is conveyed to a deposition device 6 by a turn table 5. After a reflective coat is completely formed on the disk substrate L1, the disk substrate L1 is transferred to the aging unit 7. The aging unit 7 is for stabilizing the temperature of a disk substrate before dying the disk substrate. The aging unit 7 employs the disk substrate conveying mechanism according to an embodiment of the present invention, and conveys the disk substrates arranged in an upright manner. On top of the aging unit 7, a fan device is provided for sending air that is maintained at a certain temperature.

Next, each of the two disk substrates L0, L1 is transferred to a dye spinner 9 by a conveyer 8 and a transferring arm. The dye spinner 9 applies dye to the surface of the disk substrate, and performs a spin coating method to make the dye coat more uniform. In order to reduce the process time, plural dye spinners 9 can be provided to perform parallel processing. The disk substrate covered with a dye coat is transferred to a washing spinner 10, where dye adhering to the side edge face and the back face of the disk substrate is washed off.

The washed disk substrates L0, L1 are returned to the conveyer 8, and are then transferred to a disk substrate heat-treating device 50 including the disk substrate conveying mechanism according to an embodiment of the present invention. Details of the disk substrate heat-treating device 50 are given below.

Each of the two disk substrates L0, L1 that has undergone heat treatment is conveyed to a deposition device 12 by a turn table 11. A translucent film is formed on the disk substrate L0 and a protective/reflective film is formed on the disk substrate L1.

Each of the two disk substrates L0, L1 that is coated with a film is then conveyed by a turn table 21. An adhesive is applied to the disk substrate L1 by a discharge nozzle 23. The disk substrate L0 is turned upside down by a reverse arm 22. The two disk substrates L0, L1 are superposed onto each other by an adhering device 24.

Two spinners 25 are provided for alternately transferring the superposed disk substrates. The disk substrates are rotated at high speed so that the thickness of the adhesive film between the disk substrates is made uniform and the disk substrates are adhered together. Next, after the disk substrates have been rotated at high speed, they are conveyed to an ultraviolet ray curing device 27 by a UV table 26. Ultraviolet rays are irradiated onto the disk substrates so that the adhesive between the disk substrates is cured. Subsequently, the disk substrates are inspected, and the manufacturing process ends.

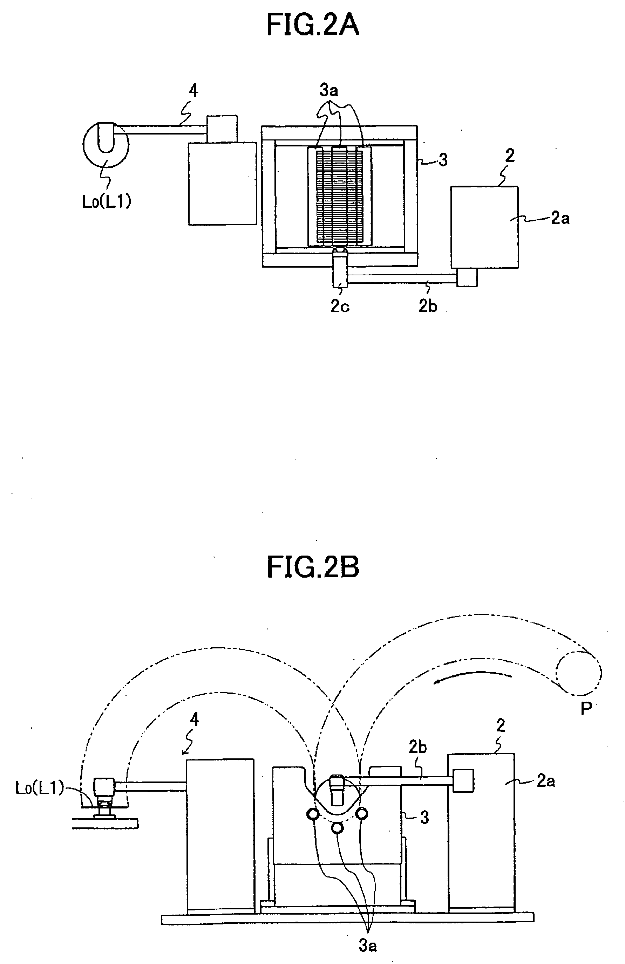

Next, a specific practical example of transferring a molded disk substrate from the molding machine 1a or 1b to the disk substrate cooling device 3 is described with reference to FIGS. 2A and 2B. The transferring unit 2 includes a transferring arm 2b and a suction unit 2c provided on the transferring arm 2b, which are driven by a driving unit 2a.

A not shown disk substrate extracting unit extracts the disk substrates one by one from the molding machine 1a or 1b. The transferring unit 2 receives the disk substrate from the disk substrate extracting unit at a position P shown in FIG. 2B, by suctioning and holding the disk substrate. As soon as the disk substrate is received, the transferring unit 2 revolves in a direction indicated by an arrow in FIG. 2B. When the disk substrate comes to a mounting position of the disk substrate cooling device 3, the disk substrate is released from being suctioned by the transferring arm 2b, and the leading edge of the transferring arm 2b is withdrawn. Accordingly, the disk substrate is transferred to the disk substrate cooling device 3,

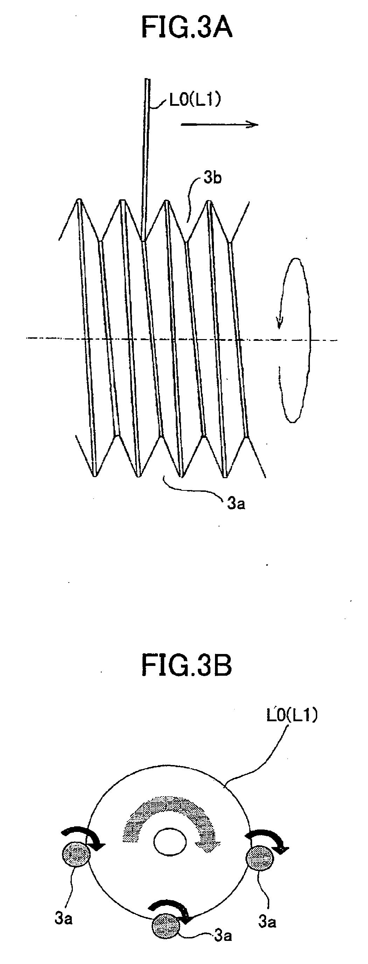

In the disk substrate cooling device 3, a set of three screw shafts 3a acts as the disk substrate conveying mechanism. The screw shafts 3a all have the same configuration. As shown in FIG. 3A, each screw shaft 3a has a helical guiding groove 3b formed with a predetermined pitch on a straight shaft. Each of the guiding grooves 3b has side walls and a base face. The depth and the width of the guiding groove 3b are configured in such a manner that the outer periphery of the disk substrate L0 (L1) can enter the guiding groove 3b and does not easily come off. The three screw shafts 3a are preferably arranged at corresponding angles of an isosceles triangle, in such a manner that the guiding grooves 3b of the three screw shafts 3a receive the circumference of the disk substrate L0 (L1) by equal amounts.

These three screw shafts 3a are rotated in the directions indicated by arrows at a predetermined speed by a not shown driving unit (FIG. 3B). Accordingly, the disk substrate L0 (L1) arranged in an upright manner with respect to the three screw shafts 3a is sent ahead by a predetermined distance along the guiding groove 3b, until the next disk substrate transferred by the transferring unit 2 arrives. In this manner, a predetermined number of disk substrates L0 (L1) are sequentially sent ahead in a lateral manner. When the disk substrate L0 (L1) sent ahead reaches a predetermined position, it is transferred by a transferring unit 4 to be subjected to the next process.

Next, a description is given of the disk substrate heat-treating device 50 employing the disk substrate conveying mechanism. The disk substrate heat-treating device 50 is incorporated in the aforementioned production line for manufacturing optical disks. The disk substrate heat-treating device 50 performs heat treatment on the disk substrate L0, L1 that has been coated with a dye coat and has been washed, in order to enhance and stabilize the quality as an optical disk, and to stabilize playback signals.

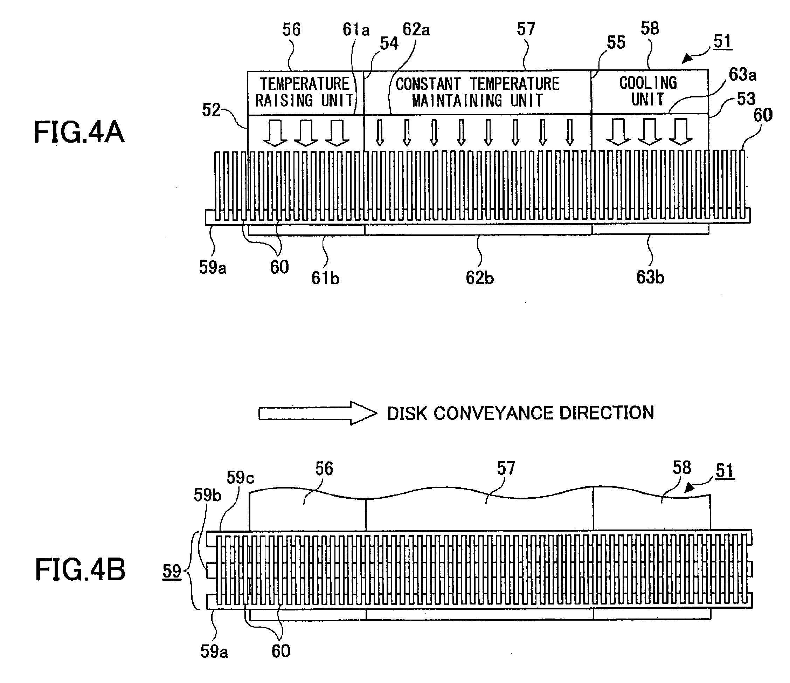

FIGS. 4A, 4B illustrate the configuration of the disk substrate heat-treating device 50 according to an embodiment of the present invention. FIG. 4A is a side view and FIG. 4B is a top view.

In these diagrams, a heat-treating chamber 51 acting as a drying oven is divided into three rooms, i.e., a temperature raising unit 56, a constant temperature maintaining unit 57, and a cooling unit 58. These rooms are formed by two side wall plates 52, 53 and two partitioning plates 54, 55. Disk substrates 60 are caused to sequentially pass through the temperature raising unit 56, the constant temperature maintaining unit 57, and the cooling unit 58, by a disk substrate conveying mechanism 59 according to an embodiment of the present invention. The disk substrate 60 is dried in the heat-treating chamber 51 so that an organic solvent is removed. The disk substrate conveying mechanism 59 that conveys the disk substrates 60 has the same configuration as the disk substrate conveying mechanism described with reference to FIGS. 1 through 3B. The disk substrate conveying mechanism 59 includes screw shafts 59a, 59b, and 59c, each having a helical guiding groove formed with a predetermined pitch. Multiple disk substrates 60 arranged in a vertical upright manner and spaced apart by predetermined intervals are sequentially conveyed. Furthermore, in FIG. 4A, 61b denotes a discharge plate of the temperature raising unit 56, 62b denotes a discharge plate of the constant temperature maintaining unit 57, and 63b denotes a discharge plate of the cooling unit 58.

The screw shafts 59a, 59b, and 59c are arranged at the angles of an isosceles triangle, with the screw shaft 59b at the vertex. As the screw shafts 59a, 59b, and 59c rotate, the disk substrates 60 are sequentially sent ahead, with predetermined intervals therebetween, by the movement of the guiding grooves formed in the screw shafts.

As indicated by arrows in FIG. 4A, in the temperature raising unit 56 and the constant temperature maintaining unit 57 of the disk substrate heat-treating device 50, hot air is blown out from ejection holes formed in a blowout plate 61a and a blowout plate 62a, respectively. In the cooling unit 58, air or gas such as nitrogen that has a temperature lower than or equal to room temperature is blown out from a blowout plate 63a. The holes through which hot air is blown out in the temperature raising unit 56 are long and thin slits formed in the blowout plate 61a. The slits are positioned immediately above the top of the disk substrates 60 that are sequentially transferred into the heat-treating chamber 51. Hot air is supplied from the slits in such a manner as to be blown in a vertical direction with respect to the conveyance direction, i.e., to be blown along the circular surface of the disk substrate 60.

It takes one minute for the disk substrates 60, arranged in an upright manner at intervals, to pass though the temperature raising unit 56. Gas is heated, by a not shown heater, from 50 °C to a temperature (e.g., 110 °C through 130 °C) that is lower than the softening temperature of the disk substrate. This gas is blown out from the slits of the blowout plate 61a at a predetermined wind speed, so that the disk substrates 60 will be heated to a predetermined temperature that is lower than the softening temperature of the disk substrate by the time they come to the entrance of the next room, which is the constant temperature maintaining unit 57.

Next, in the constant temperature maintaining unit 57, the temperature of the disk substrates 60, which has been increased to a predetermined temperature in the temperature raising unit 56, is further increased to a specified temperature or maintained so as not to decrease from the specified temperature. The disk substrates 60 are maintained at this specified temperature so that an organic solvent is substantially completely removed from an organic dye thin film on each of the disk substrates 60.

In this manner, the disk substrates 60 are dried while being sequentially conveyed by the disk substrate conveying mechanism 59 in the constant temperature maintaining unit 57. Then, the disk substrates 60 are made to pass through the partitioning plate 55 and are sent into the cooling unit 58. The cooling unit 58 has substantially the same structure as that of the temperature raising unit 56; the only difference is that the gas blown out from the slits in the blowout plate 63a is at room temperature. Accordingly, in the cooling unit 58, the temperature of the disk substrates 60 decreases from the specified temperature to around room temperature.

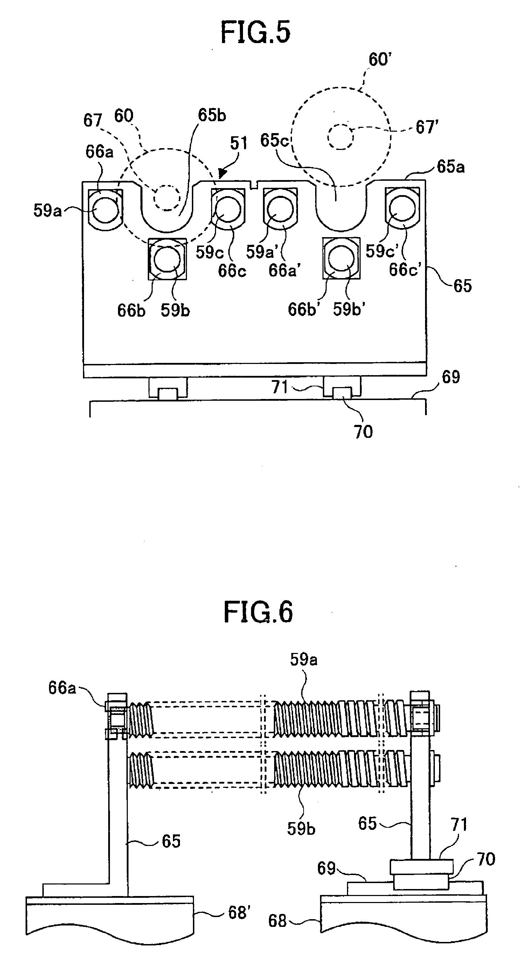

Details of the disk substrate conveying mechanism 59 are described with reference to FIGS. 5 and 6. FIG. 5 illustrates the screw shafts 59a, 59b, and 59c and screw shafts 59a', 59b', and 59c'. The screw shafts 59a', 59b', and 59c' have the same structures as and are arranged parallel to the screw shafts 59a, 59b, and 59c. Furthermore, FIGS. 5 and 6 illustrate supporting members 65 provided on both ends of these screw shafts for rotatably supporting the ends of these screw shafts. Moreover, in FIGS. 5 and 6, 67 and 67' denote a suction unit, 68 and 68' denote a base unit, 69 denotes a guide rail, 70 denotes a linear driving device, and 71 denotes a mounting unit. In the configuration illustrated in FIG. 5, there are two lines provided for simultaneously heat-treating and drying two disk substrates 60 and 60'. Outer rings of radial bearings 66a, 66b, and 66c are fixed to the supporting member 65. The screw shafts 59a, 59b, and 59c are fixed to the inner rings of the radial bearings 66a, 66b, and 66c in such a manner as to freely rotate with respect to the supporting member 65. The same applies to the screw shafts 59a', 59b', and 59c'. The screw shafts 59a, 59b, and 59c and the screw shafts 59a', 59b', and 59c' are joined to a not shown driving source via a not shown belt.

The supporting member 65 includes slots 65b, 65c extending downward from its upper face 65a. By providing the slot 65b, the following effect can be provided. That is, when transferring the disk substrate 60 to the screw shafts 59a, 59b, and 59c, a not shown conveying arm enters the slot 65b, so that the disk substrate 60 can be smoothly placed in the guiding grooves of the screw shafts 59a, 59b, and 59c without providing a shock to the disk substrate 60. The groove 65c provides the same effects as the groove 65b. The disk substrate 60' can be smoothly placed in the guiding grooves of the screw shafts 59a', 59b', and 59c', without receiving a shock. The shape of the slots 65b, 65c is not limited, as long as the not shown conveying arm does not contact the inner walls of the slots 65b, 65c when the conveying arm enters the slots 65b, 65c from the front side as viewed in the figure, to place the disk substrates 60, 60' into the respective screw shafts 59a, 59b, and 59c and screw shafts 59a', 59b', and 59c' at the back side as viewed in the figure.

The disk substrate conveying mechanism according to first, second, and third embodiments of the present invention is described below. Along the outer peripheral edge of the disk substrate L0 (L1), the portion where a burr is created is referred to as an outer peripheral edge A. The disk substrate L0 (L1) is arranged in such a manner that the outer peripheral edge A is on the front in the conveyance direction. The disk substrate L0 (L1) is conveyed while having its outer peripheral edge A supported by a side wall of the guiding groove 3b or a corner between a front side wall at the front of the guiding groove 3b in the conveyance direction and a tilted base face of the guiding groove 3b. Accordingly, as the burr contacts the side wall of the guiding groove 3b or the corner between the front side wall at the front of the guiding groove 3b in the conveyance direction and the tilted base face of the guiding groove 3b, the burr is folded onto the outer peripheral edge face of the disk substrate L0 (L1) (instead of being folded toward the stamper side, which is the side to be adhered to another disk). As a result, (as the burr does not stand up on the stamper side), it is possible to prevent adverse effects from being caused when adhering together the disk substrates.

In the present invention, the guiding groove 3b includes a front side wall at the front of the guiding groove 3b in the conveying direction, a back side wall at the back of the guiding groove 3b in the conveying direction, and a base face that is tilted in such a manner that the guiding groove 3b becomes deeper gradually from the back toward the front in the conveying direction (first embodiment). Specifically, the base face of the guiding groove 3b is tilted in such a manner that the guiding groove 3b is deeper beneath the outer peripheral edge A of the disk substrate L0 (L1). Accordingly, a space into which a folded burr can enter is provided between the outer peripheral edge A and the base face of the guiding groove 3b, which burr is folded by the front side wall of the guiding groove 3b. The tilted base face of the space into which a folded burr can enter preferably has an elevation difference of 100 µm or more, so that the depth of the space is 100 µm or more from the outer peripheral edge A of the disk substrate L0 (L1).

Alternatively, the guiding groove 3b includes a front side wall at the front of the guiding groove 3b in the conveying direction, a back side wall at the back of the guiding groove 3b in the conveying direction, and a base face with a recessed part at the front edge of the base face in the conveying direction (second embodiment).
Specifically, the recessed part is provided in the base face of the guiding groove 3b in such a manner that the guiding groove 3b is deeper beneath the outer peripheral edge A of the disk substrate L0 (L1). Accordingly, a space into which a folded burr can enter is provided between the outer peripheral edge A and the base face of the guiding groove 3b, which burr is folded by the front side wall of the guiding groove 3b. The recessed part in the base face of the space into which a folded burr can enter preferably has a depth of 100 µm or more, so that the depth of the space is 100 µm or more from the outer peripheral edge A of the disk substrate L0 (L1).

Alternatively, the guiding groove 3b includes a front side wall at the front of the guiding groove 3b in the conveying direction, a back side wall at the back of the guiding groove 3b in the conveying direction, and a base face that is tilted in such a manner that the guiding groove 3b becomes deeper gradually from the front toward the back in the conveying direction (third embodiment). Specifically, the disk substrate L0 (L1) is conveyed while having its outer peripheral edge A supported by a corner between the front side wall at the front of the guiding groove 3b in the conveyance direction and the tilted base face of the guiding groove 3b. A space into which a folded burr can enter is provided between the outer peripheral edge of the disk substrate L0 (L1) and the tilted base face of the guiding groove 3b, which burr is folded by the corner between the front side wall at the front of the guiding groove 3b in the conveyance direction and the tilted base face of the guiding groove 3b. The angle (tilted angle) of the corner between the tilted base face of the guiding groove 3b and the outer peripheral edge of the disk substrate L0 (L1) is 5° through 65°, more preferably 10° through 28°. The space into which a folded burr can enter preferably has a depth of 100 µm or more at the back side of the guiding groove 3b in the conveyance direction.

In the first, second, and third embodiments, the angle between the front side wall in the conveyance direction and a plane orthogonal with respect to an axial direction of the screw shaft 3a is preferably smaller than the angle between the back side wall and the plane orthogonal with respect to the axial direction of the screw shaft 3a. Accordingly, the angle between the side wall supporting the outer peripheral edge A of the disk substrate L0 (L1) and the disk substrate L0 (L1) is smaller than the angle between the other side wall and the disk substrate disk substrate L0 (L1).

In the first, second, and third embodiments, the width of the base face of the guiding groove 3b is to be more than or equal to (the thickness of the disk substrate L0 (L1))+10 µm and less than or equal to (the thickness of the disk substrate L0 (L1))+500 µm.

As described above, the disk substrates L0 and L1 pass through the disk substrate cooling device 3 and the disk substrate heat-treating device 50, each device including the disk substrate conveying mechanism according to an embodiment of the present invention. Then, a film is formed on both the disk substrates L0 and L1 at the deposition device 12, the disk substrate L0 is reversed, and a liquid adhesive is applied to the disk substrate L1. Then, at the disk substrate adhering device 24, the two disk substrates are adhered together. The disk substrates L0 and L1 are subjected to a UV curing process. Accordingly, an optical disk is obtained, without any bubbles generated at the outer periphery of the adhesive layer.

### [Practical examples]

Next, descriptions are given of examples of experiments performed for verifying the effects of the present invention.

### <Experiment example 1>

First, a description is given of examination results obtained with a disk substrate heat-treating device employing a conventional disk substrate conveying mechanism. These results were obtained by examining the height of the burr and the adverse effects of bubbles generated at the outer periphery of a disk.

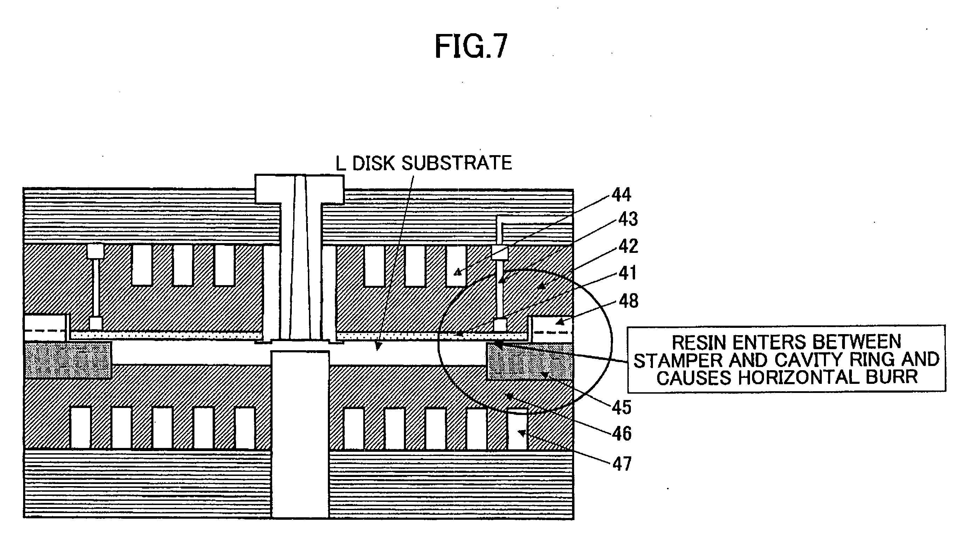

FIG. 7 is a sectional view of a die. As shown in FIG. 7, because there is a clearance between a stamper 41 and a cavity ring 45, a horizontal burr is created at the edge face of a disk substrate L. Furthermore, in FIG. 7, 42 denotes a horizon glass face, 43 denotes a stamper suction air pipe, 44 denotes a temperature adjustment pipe, 46 denotes a movable mirror face, 47 denotes a temperature adjustment pipe, and 48 denotes an abutment ring.

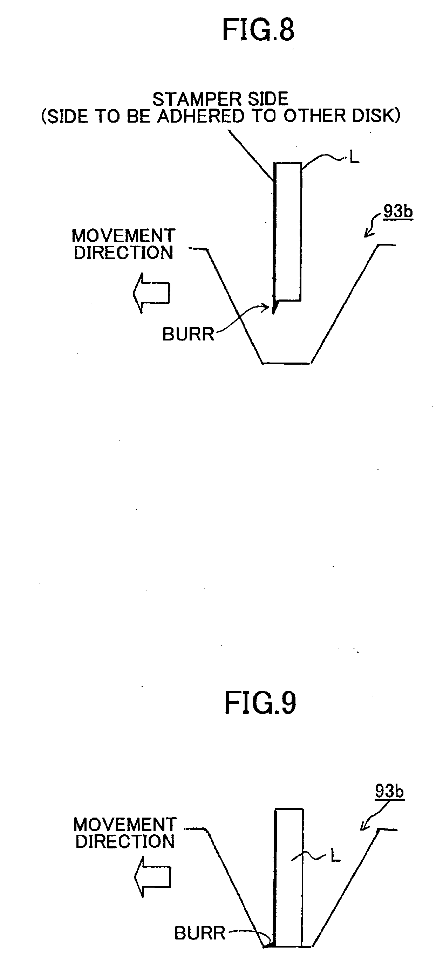

As shown in FIG. 8, if this disk substrate L is inserted into a guiding groove 93b of a screw shaft in a conventional disk substrate conveying mechanism, as shown in FIG. 9, the edge face of the disk substrate L will abut a horizontal portion of the base face of the guiding groove 93b. If the screw shaft is axially rotated in this situation for conveying the disk substrate L, the burr of the disk substrate L will be folded, by the base face of the guiding groove 93b, toward the stamper side (the side to be adhered to another disk) in spite of the fact that this is toward the movement direction. Consequently, the burr stands up on the main surface of the disk substrate.

Changes were made to the clearance between the stamper 41 and the cavity ring 45 of the die shown in FIG. 7, in order to change the extent of the horizontal burr. Without performing any post-processes for mitigating the burr, two disk substrates L0 and L1 were adhered together. The extent of bubbles generated at the outer periphery was examined. Results of this examination are shown in Table 1. The case where the clearance between the stamper 41 and the cavity ring 45 is 17 µm corresponds to a (small burr) condition. The case where the clearance between the stamper 41 and the cavity ring 45 is 25 µm corresponds to a (large burr) condition. The case where both the disk substrates L0, L1 have the (small burr) condition corresponds to a molding condition 1. The case where the disk substrate L0 has a (large burr) condition and the disk substrate L1 has a (small burr) condition corresponds to a molding condition 2. The case where the disk substrate L0 has a (small burr) condition and the disk substrate L1 has a (large burr) condition corresponds to a molding condition 3. For each of these cases, the height of the standing burr at the outer periphery on the stamper side of the disk substrate and the extent of bubbles generated at the outer periphery were examined.

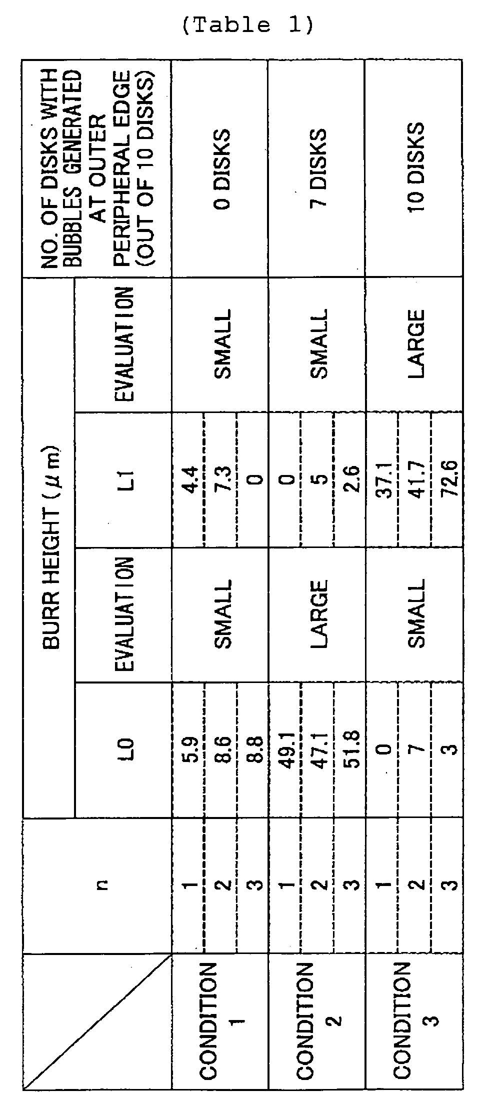

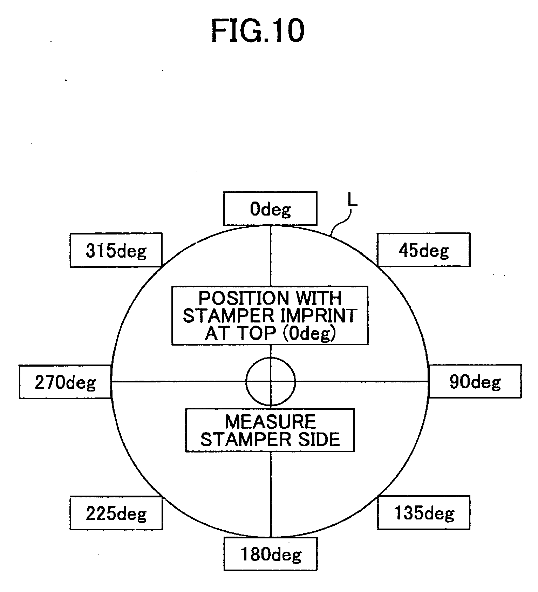

Furthermore, with respect to the disk substrate L1, the transition of the burr height on the stamper side (the side to be adhered to the other disk L0) in the optical disk production line and the burr height when adhered with the other disk L0 were examined. Specifically, as shown in FIG. 10, on the stamper side of the disk substrate L1 molded with the (small burr) condition or the (large burr) condition, the position on the outer periphery where a stamper imprint (L) is located is regarded as being 0 degrees (at the top in FIG. 10). In a clockwise direction from this position, at positions corresponding to 45, 90, 135, 180, 225, 270, and 315 degrees are specified. At each of these positions, the burr height at the outer peripheral edge was measured at the stages after molding/cooling, before annealing (heat-treating), and after annealing/before adhering to another disk substrate. A surface roughness tester (DEKTAK3) was used to measure the burr height. Results are shown in Table 2. In Table 2, "-" indicates that measurement was not performed. In this example, the measurement results for the disk substrate L1 are shown; substantially similar results were obtained with the disk substrate L0.

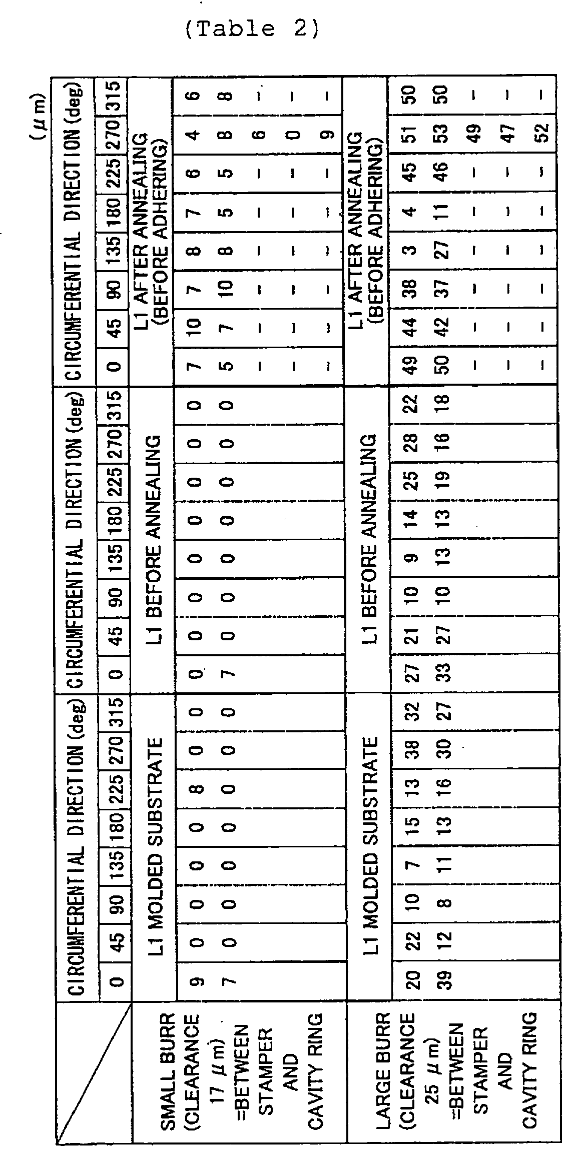

As shown in Table 2, the horizontal burr can be mitigated by reducing the width of the clearance between the stamper 41 and the cavity ring 45 in a die structure. However, if the cavity ring 45 is too close to the stamper 41, the stamper 41 will be deformed. For this reason, there have been limitations in the attempt of mitigating the burr by adjusting the configuration of the die. However, an embodiment of the present invention mitigates the horizontal burr by a post-process in the disk conveying mechanism, thereby preventing bubbles from being generated in the outer periphery of the adhesive layer during the adhering process due to the horizontal burr.

### <Experiment example 2>

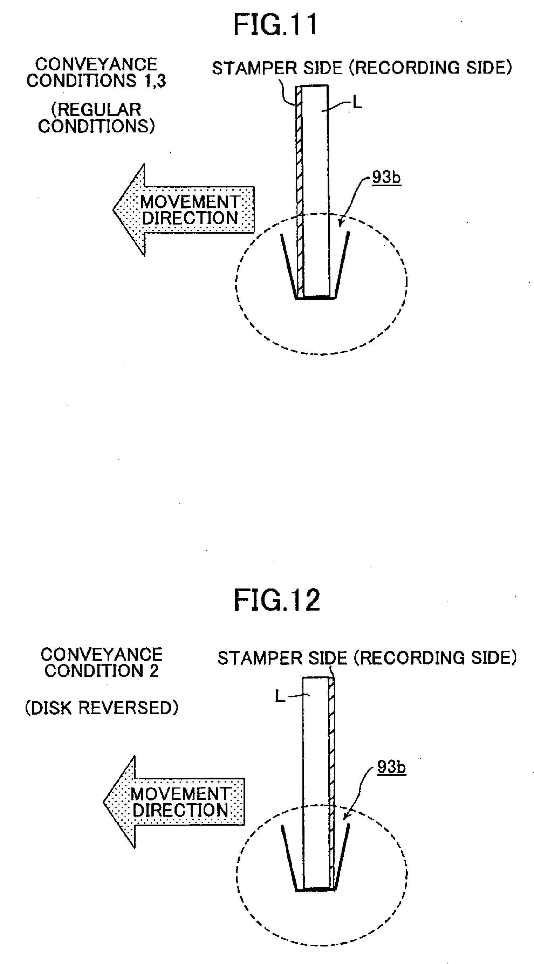

With the use of a conventional disk substrate conveying mechanism, disk substrates with horizontal burrs were conveyed under the following conveying conditions (Table 3). The standing burrs were then examined. Specifically, the impact on the standing burr was examined by changing the side in which the stamper side (the side to be adhered to another disk) is facing when the disk substrate is inserted to the guiding grooves of the screw shafts, and by changing the direction of rotating the screw shaft. FIG. 11 illustrates the insertion direction of a disk substrate in the case of the conveying conditions 1 and 3 in a guiding groove having a conventional shape. FIG. 12 illustrates the insertion direction of a disk substrate in the case of the conveying condition 2 in a guiding groove having a conventional shape.

**(Table 3)**

| CONVEYANCE DIRECTION | SIDE OF STAMPER SIDE ON DISK SUBSTRATE | DIRECTION OF SCREW ROTATION |
|---|---|---|
| 1 | FRONT SIDE IN DISK MOVEMENT DIRECTION | FRONTWARD DIRECTION |
| 2 | BACK SIDE IN DISK MOVEMENT DIRECTION | FRONTWARD DIRECTION |
| 3 | FRONT SIDE IN DISK MOVEMENT DIRECTION | REPEAT FRONTWARD AND BACKWARD ROTATION |

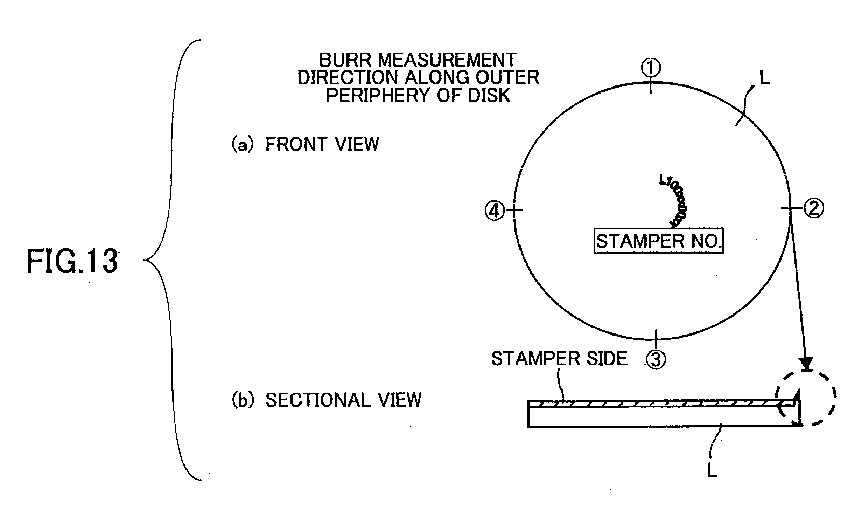

As shown in FIG. 13, the examinations were made by measuring the burr heights at four positions (1, 2, 3, 4) along the outer peripheral edge on the stamper side of the disk substrate, before and after an annealing process. Results are shown in Table 4. In Table 4, (a) shows the measurement results before the annealing process (before conveying the disk substrate), and (b) shows the measurement results after the annealing process (after conveying the disk substrate), at the four positions (1, 2, 3, 4) under the conveying conditions 1 through 3.

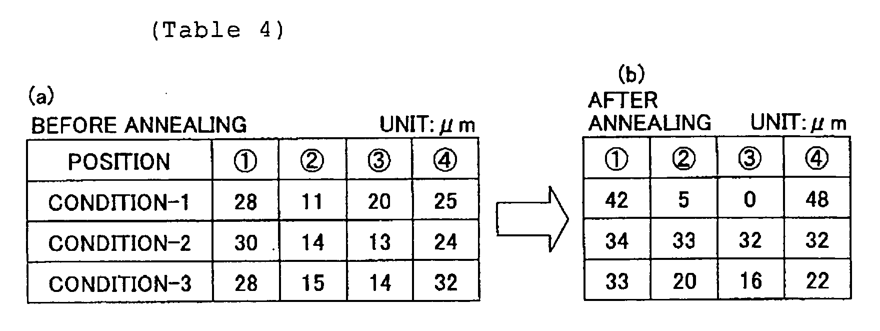

These results say that if the horizontal burr is on the back side of the disk substrate in the disk movement direction in the guiding groove (hereinafter, also referred to as opposite-side-conveyance), the burr will be naturally folded toward the stamper side and the burr will stand up on the stamper side. Thus, the burr stands up uniformly around the circumference of the disk substrate. However, if the horizontal burr is on the front side of the disk substrate in the disk movement direction in the guiding groove, the burr will stand up in a nonuniform manner, i.e., the burr will stand up on the stamper side at some portions but will stand up toward the other side at other portions. It was found that the height of the standing burr was higher in the case where the burr had stood up toward the movement direction, compared to the case where the disk substrate had been placed with its stamper side on the back in the movement direction.

Summarizing the above, under conveying condition 1 (regular conveyance), the horizontal burr was on the front side in the movement direction, and therefore, the burr was folded frontward and backward with respect to the movement direction. Furthermore, the burr that was folded in the movement direction was considerably higher than that in the case of opposite-side-conveyance. Next, under conveying condition 2 (opposite-side-conveyance), the horizontal burr was on the back side of the disk substrate with respect to the movement direction, and therefore, the burr was uniformly folded toward the stamper side in a uniform manner around the circumference. Under conveying condition 3, the screw shaft was repeatedly rotated frontward and backward, and therefore, the elements of both conveying conditions 1 and 2 were incorporated. As a result, the burr became irregularly flat at some portions, as in the case of conveying condition 1. Based on these results, it was possible to determine the relationship between the direction in which the stamper side is facing when the disk substrate is inserted in the guiding grooves and the state of the standing burr. Particularly, it was found that in the existing technology, it is difficult to mitigate a burr on the outer periphery in screw conveyance.

### <Experiment example 3>

Based on the results obtained with experiment example 2, the shape of the guiding groove was modified in an attempt to mitigate the burr. Specifically, changes were made with respect to the condition in which the outer peripheral edge of the disk substrate contacts the guiding groove.

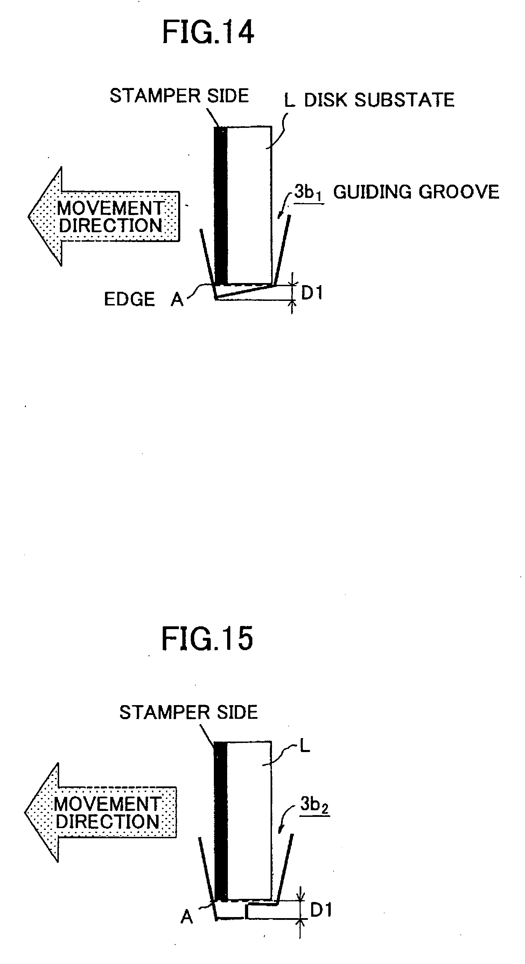

FIG. 14 illustrates a first modification of the shape of the guiding groove of the screw shaft for mitigating the burr (practical example 1). The base face of a guiding groove 3b₁ is tilted in such a manner that the groove becomes deeper gradually toward the stamper side of a disk substrate L (outer peripheral edge A). Accordingly, a space into which a folded burr can enter is provided between the outer peripheral edge A of the disk substrate L and the base face of the guiding groove 3b₁, which burr is folded by the side face of the guiding groove 3b₁.

It was found in experiment example 1 that the maximum height of the horizontal burr from the substrate edge face before screw conveyance fell in a range of 100 µm through 130 µm in both of the following cases, i.e., the case of a molded substrate (before annealing) corresponding to the disk substrate L0 having a (large burr) condition under the molding condition 2 and the case of a molded substrate (before annealing) corresponding to the disk substrate L1 having a (large burr) condition under the molding condition 3. Considering this result, the depth of the space into which a folded burr can enter is preferably greater than or equal to 100 µm, more preferably greater than or equal to 200 µm. That is, in order to ensure that the folded burr does not become unfolded, the base face is to be tilted in such a manner that the difference of elevation D1 of the base face is preferably greater than or equal to 100 µm, which corresponds to the burr height, and more preferably greater than or equal to 200 *µm.

When the disk substrate is placed in the guiding grooves in such a manner that the stamper side having a horizontal burr is on the back in the disk movement direction, the base face of the guiding groove 3b₁ is to be tilted in the opposite direction to achieve the same effects as the above.

Next, FIG. 15 illustrates a second modification of the shape of the guiding groove of the screw shaft for mitigating the burr (practical example 2). The base face of a guiding groove 3b₂ has a recessed part where the groove becomes deeper near the stamper side of the disk substrate L (outer peripheral edge A). Accordingly, a space into which a folded burr can enter is provided between the outer peripheral edge A of the disk substrate L and the base face of the guiding groove 3b₂, which burr is folded by the side face of the guiding groove 3b₂.

In this example, similar to the above, in order to ensure that the folded burr does not become unfolded, the depth D2 of the recessed part is preferably greater than or equal to 100 µm, which corresponds to the burr height, and more preferably greater than or equal to 200 µm.

When the disk substrate is placed in the guiding grooves in such a manner that the stamper side having a horizontal burr is on the back in the disk movement direction, the recessed part in the base face of the guiding groove 3b₂ is to be positioned on the opposite side with respect to the disk movement direction.

An angle θ1 between one of the side walls of the guiding groove 3b of the screw shaft, i.e., the side wall supporting the outer periphery (outer peripheral edge A) of the stamper side of the disk substrate L, and the disk substrate L (the side perpendicular to the axial direction of the screw shaft) is preferably smaller than an angle θ2 between the other side wall and the disk substrate L (third modification).

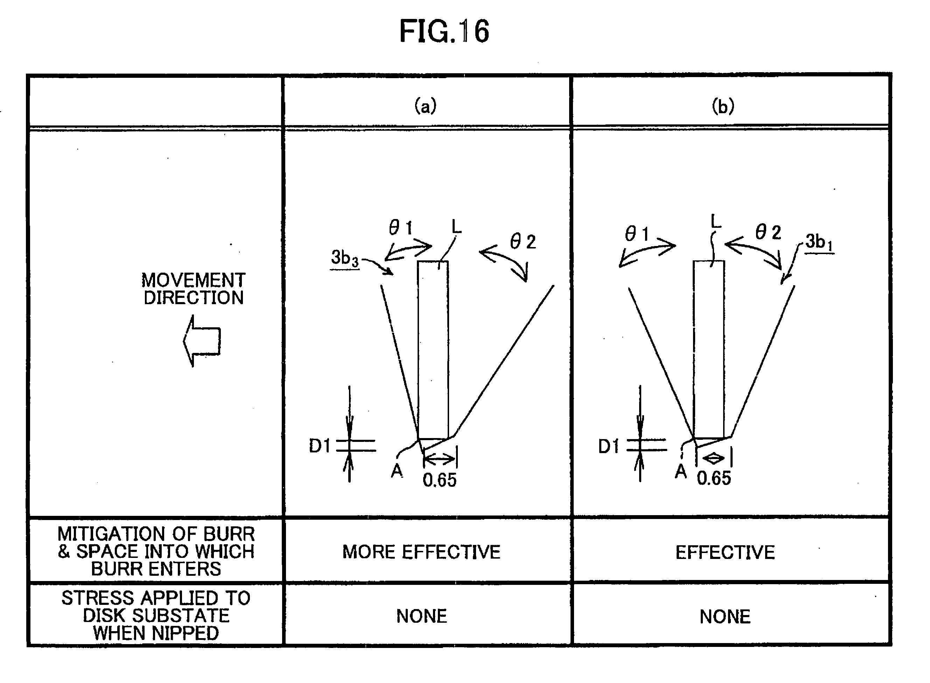

FIG. 16 (a) illustrates these angles (practical example 3). In a guiding groove 3b₃, the side wall on the front side in the movement direction is receiving the outer peripheral edge A of the stamper side of the disk substrate L, in order to mitigate the burr. In order to further ensure that the burr is properly folded backward, this side wall of the guiding groove 3b₃ is tilted toward an upright position. Specifically, θ1 is preferably 5° through 25°, θ2 is preferably 25° through 45°, and (θ2-θ1) is preferably 15° through 25°. Furthermore, to prevent the horizontal burr from being unfolded, similar to that described with reference to FIG. 14, the guiding groove 3b₃ is made to have a space into which a folded burr can enter by tilting the base face of the guiding groove 3b₃ in such a manner that the groove becomes deeper gradually toward the stamper side of the disk substrate L (outer peripheral edge A). Furthermore, the horizontal width of the substrate-receiving part at the base face of the guiding groove 3b₃ (groove width) is 650 µm, while the thickness of the disk substrate L is 600 µm. Such a configuration prevents stress from being applied to the high-temperature disk substrate immediately after the annealing process or the molding process, thereby preventing side-runout of the disk substrate or preventing birefringence properties from being degraded. In FIG. 16, (b) is a detailed diagram of the guiding groove 3b₁ shown in FIG. 14.

In a disk substrate heat-treating device employing the disk substrate conveying mechanism shown in (a) of FIG. 16, disk substrates were conveyed in a heat-treatment temperature of 85° and within a heat-treatment time of 15 minutes. The burr heights of the disk substrates were measured before and after the conveyance. In this example, samples no. 1 and 2 were measured four times each, and the results are shown in Table 5. In Table 5, (a) shows the measurement results before conveying the disk substrate, and (b) shows the measurement results after conveying the disk substrate.

**(Table 5)**

| (a) BEFORE ANNEAL SCREW CONVEYANCE | | | | |
|---|---|---|---|---|
| | BURR HEIGHT (µm) | | | |
| SAMPLE | ① | ② | ③ | ④ |
| NO.1 | 25 | 38 | 21 | 15 |
| NO.2 | 11 | 34 | 10 | 10 |
| | | | | |

| (b) AFTER ANNEAL SCREW CONVEYANCE | | | | |
|---|---|---|---|---|
| | BURR HEIGHT (µm) | | | |
| SAMPLE | ① | ② | ③ | ④ |
| NO.1 | 2 | 4 | 4 | 1 |
| NO.2 | 2 | 6 | 3 | 0 |

It was found that after the disk substrate had passed through the disk substrate heat-treating device with the disk substrate conveying mechanism, the height of the burr on the outer periphery was reduced, which means that the standing burr was mitigated. Specifically, the horizontal burr on the outer peripheral edge of the disk substrate was received (clamped) by the side wall of the guiding groove on the front side in the disk movement direction, in a point contact manner. Accordingly, the burr was prevented from being folded toward the stamper side, and it can be said that this configuration is effective in preventing the burr from standing on the stamper side.

Next, these disk substrates were adhered together as disk substrates L0, L1, and the extent of bubbles generated at the outer periphery was examined. As a result, it was found that zero out of 50 disk substrates had bubbles (no bubbles were generated). Accordingly, it was found that bubbles can be prevented in disk substrates adhered together, as reliably as the case of molding condition 1 in Table 1.

### <Experiment example 4>

Based on the results obtained in experiment example 2, in an attempt to mitigate the burr, the shape of the guiding groove was modified to change the state of contact between the outer peripheral edge of the disk substrate and the guiding groove.

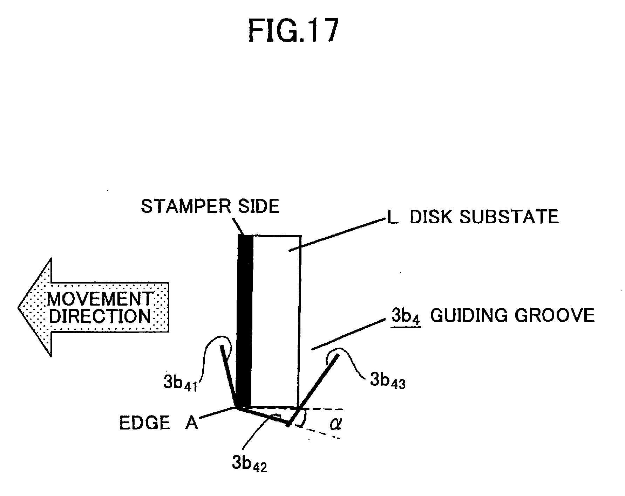

FIG. 17 illustrates a fourth modification of the shape of the guiding groove of the screw shaft for mitigating the burr (practical example 4). A guiding groove 3b₄ includes a side wall on the front side in the conveyance direction 3b₄₁ (front side wall 3b₄₁), a side wall on the back side in the conveyance direction 3b₄₃ (back side wall 3b₄₃), and a tilted base face 3b₄₂ (angle with respect to axial direction of screw shaft: α). The tilted base face 3b₄₂ is provided in such a manner that the guiding groove 3b₄ becomes deeper gradually from the front toward the back (becomes shallower toward the stamper side of the disk substrate L (outer peripheral edge A)). Accordingly, a space into which a folded burr can enter is provided between the outer peripheral edge of the disk substrate L and the base face of the guiding groove 3b₄, which burr is folded by the corner between the front side wall 3b₄₁ and the tilted base face 3b₄₂ of the guiding groove 3b₄.

It was found in experiment example 1 that the maximum height of the horizontal burr from the substrate edge face before screw conveyance fell in a range of 100 µm through 130 µm in both of the following cases, i.e., the case of a molded substrate (before annealing) corresponding to the disk substrate L0 having a (large burr) condition under the molding condition 2 and the case of a molded substrate (before annealing) corresponding to the disk substrate L1 having a (large burr) condition under the molding condition 3. Considering this result, the length of the space into which a folded burr can enter is made to fall in a range of 100 µm through 130 µm. The angle (tilted angle) α of the corner between the tilted base face 3b₄₂ of the guiding groove 3b₄ and the outer peripheral edge of the disk substrate L is 5° through 65°, more preferably 10° through 28°. Accordingly, the burr is folded at an acute angle by the corner between the front side wall 3b₄₁ and the tilted base face 3b₄₂ of the guiding groove 3b₄, in such a manner as to come in close contact with the outer peripheral edge face of the disk substrate L.

When the disk substrate is placed in the guiding grooves in such a manner that the stamper side having a horizontal burr is on the back in the disk movement direction, the base face of the guiding groove 3b₄ is to be tilted in the opposite direction to achieve the same effects as the above.

An angle θ1 between one of the side walls of the guiding groove 3b of the screw shaft, i.e., the front side wall, and the disk substrate L is preferably smaller than an angle θ2 between the back side wall and the disk substrate L. Specifically, θ1 is preferably 5° through 25°, θ2 is preferably 25° through 45°, and (θ2-θ1) is preferably 15° through 25°.

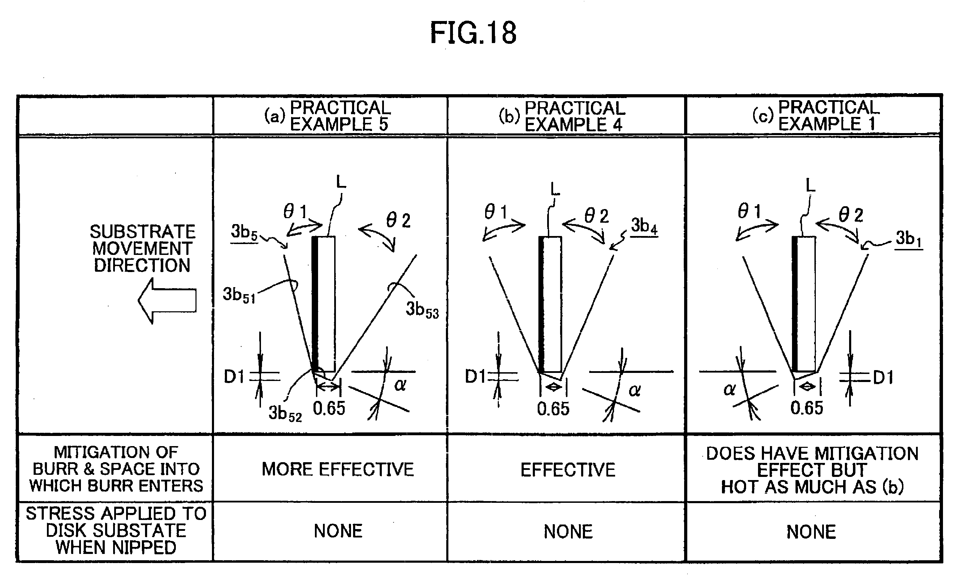

FIG. 18 (a) illustrates these angles (practical example 5). In a guiding groove 3b₅, the corner between a side wall 3b₅₁ (front side wall) on the front side in the conveyance direction (movement direction) and a tilted base face 3b₅₂ is receiving the outer peripheral edge A of the stamper side of the disk substrate L, in order to mitigate the burr. In order to further ensure that the burr is properly folded backward, the front side wall 3b₅₁ of the guiding groove 3b₅ is tilted toward an upright position. Furthermore, to prevent the horizontal burr from being unfolded, similar to that described with reference to FIG. 17, the guiding groove 3b₅ is made to have a space into which a folded burr can enter by tilting the base face 3b₅₂ of the guiding groove 3b₅ in such a manner that the groove becomes shallower gradually toward the stamper side of the disk substrate L (outer peripheral edge A). Furthermore, the horizontal width of the substrate-receiving part at the base face 3b₅₂ of the guiding groove 3b5 (groove width) is 650 µm, while the thickness of the disk substrate L is 600 µm. Such a configuration prevents stress from being applied to the high-temperature disk substrate immediately after the annealing process or the molding process, thereby preventing side-runout of the disk substrate or preventing birefringence properties from being degraded. In FIG. 18, (b) is a detailed diagram of the guiding groove 3b₄ shown in FIG. 17 (practical example 4), and (c) is a detailed diagram of the guiding groove 3b₁ shown in FIG. 14 (practical example 1).

In a disk substrate heat-treating device employing the disk substrate conveying mechanism including the guiding groove 3b₄ shown in (b) of FIG. 18, disk substrates were conveyed in a heat-treatment temperature of 85° and within a heat-treatment time of 15 minutes. The burr heights of the disk substrates were measured before and after the conveyance. The examination for practical example 4 was performed under these conditions, and measurements were made for three sample disk substrates. The disk substrate conveying mechanism with condition 1 of practical example 1 was used as a comparative example under conventional conditions. The disk substrate conveying mechanism having the guiding groove 3b₁ was used as the practical example 1. The same experiment as that for practical example 4 was performed for the comparative example and the practical example 1.

The burr height on the substrate was measured under the same conditions as the experiment example 1. For three disk substrates L1, the maximum height of the burr was measured before annealing and after annealing (after passing though the screws of the disk substrate heat-treating device), at positions corresponding to four angles (0, 90, 180, and 270 degrees).

Table 6 shows results of measurements of the molding burr before and after disk substrate conveyance.

**(Table 6)**

| L1 SUBSTRATE CONDITION | BURR HEIGHT ON SUBSTRATE (DISK SUBSTRATE L1) | |
|---|---|---|
| | BEFORE ANNEALING | AFTER ANNEALING (AFTER PASSING SCREW) |
| | max | max |
| COMPARATIVE EXAMPLE | 31~39 µm | 40~51 µm |
| PRACTICAL EXAMPLE 4 | 31~39 µm | 0~1 µm |
| PRACTICAL EXAMPLE 1 | 31~39 µm | 13~14 µm |

It was found that in practical examples 1 and 4, after the disk substrate had passed through the disk substrate heat-treating device with the disk substrate conveying mechanism, the height of the burr on the outer periphery was reduced, which means that the standing burr was mitigated. Specifically, the horizontal burr on the outer peripheral edge of the disk substrate was received (clamped), in a point contact manner, by the front side wall (front side wall in the disk movement direction) of the guiding groove or a corner between the front side wall (front side wall in the disk movement direction) of the guiding groove and the tilted base face. Accordingly, the burr was prevented from being folded toward the stamper side. It can be said that these configurations are effective in preventing the burr from standing on the stamper side. Practical example 4 is even more effective than practical example 1 in mitigating the burr.

Next, the disk substrate obtained in practical example 4, which was used as the disk substrate L1, and a disk substrate L0 treated with the use of the conventional screw of the comparative example, were adhered together under the same conditions to make an optical disk (practical example 5), and the extent of bubbles generated at the outer periphery was examined. The disk substrate L1 and a disk substrate obtained in the comparative example were used to fabricate an optical disk in the same manner, which was examined as a comparative example. The number of examined disks 'n' was 260 disks. It was found that zero out of 260 optical disks had bubbles (no bubbles were generated). Accordingly, it was found that bubbles can be prevented in disk substrates adhered together, as reliably as the case of molding condition 1 in Table 1.

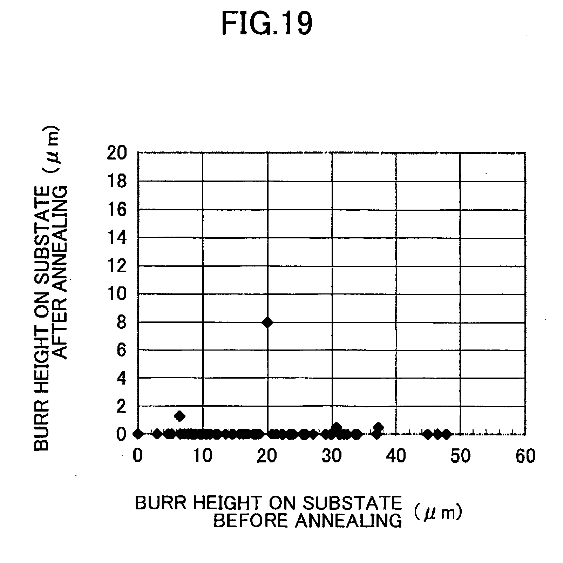

Next, as shown in Table 6, in the case of practical example 4, the burr height is 31 µm through 39 µm before annealing, but the burr height becomes 0 µm through 1 µm after annealing, which means that the burr is substantially eliminated. Accordingly, with the purpose of testing this configuration being to see the limit in the ability of preventing the burr, the relationship between the burr height before and after annealing was examined. Results are shown in FIG. 19. In this examination, the maximum burr height before annealing was 47 µm; however, it was found that if the burr height was any less than 47 µm before annealing, the burr height will become substantially zero µm. Although there were irregularities, the burr height after annealing was within a range of zero µm through 8 µm. Hence, it was confirmed that this configuration is highly effective in mitigating the burr.

In the above embodiments, an optical disk configured to receive light on one side is made by adhering together double-layer substrates. However, the present invention is not limited thereto. The present invention is similarly applicable to adhering together single-layer disks or other types of disks that requires a highly precise laminating step. Furthermore, an embodiment of the present invention is not only applicable to the disk substrate conveying mechanism of the disk substrate heat-treating device (screw conveying in an annealing step); an embodiment of the present invention is also applicable to a case of receiving a disk substrate in a disk substrate cooling device immediately after the disk substrate is extracted from a high-temperature die having a temperature as high as 120°C. Specifically, a horizontal burr is created due to a cavity ring of the die. The cavity ring is lifted up by a spring when the disk substrate is extracted. After the horizontal burr stands up on the disk substrate, the disk substrate conveying mechanism according to an embodiment of the present invention is capable of mitigating the standing burr on the stamper surface.

According to one embodiment of the present invention, a disk substrate conveying mechanism includes a plurality of screw shafts each including a guiding groove provided in a helical manner, which guiding grooves are configured to support an outer peripheral edge of a disk substrate molded with a die, wherein the screw shafts are axially rotated to convey the disk substrate in a conveying direction; and each of the guiding grooves includes a front side wall at a front of the guiding groove in the conveying direction, a back side wall at a back of the guiding groove in the conveying direction, and a base face that is tilted in such a manner that the guiding groove becomes deeper gradually from the back toward the front in the conveying direction.

Thus, while the disk substrate is conveyed with its stamper side on the front in the conveying direction, an outer peripheral edge A around the outer periphery of the stamper side of the disk substrate having a horizontal burr is received, in a point contact manner, by the front side wall of the guiding groove of the screw shaft. Accordingly, a space is provided between the outer peripheral edge A and the base face of the guiding groove. As the disk substrate is conveyed (as the screw shaft rotates), the horizontal burr is folded toward a direction opposite to the stamper side (onto the outer peripheral edge face). Hence, the burr height on the stamper side is reduced by the time the disk substrates are adhered together.

According to one embodiment of the present invention, a disk substrate conveying mechanism includes a plurality of screw shafts each including a guiding groove provided in a helical manner, which guiding grooves are configured to support an outer peripheral edge of a disk substrate molded with a die, wherein the screw shafts are axially rotated to convey the disk substrate in a conveying direction; and each of the guiding grooves includes a front side wall at a front of the guiding groove in the conveying direction, a back side wall at a back of the guiding groove in the conveying direction, and a base face that includes a recessed part at a front edge of the base face in the conveying direction.

Thus, while the disk substrate is conveyed with its stamper side on the front in the conveying direction, an outer peripheral edge A around the outer periphery of the stamper side of the disk substrate having a horizontal burr is received, in a point contact manner, by the front side wall of the guiding groove of the screw shaft (at the top edge of the recessed part). Hence, similar to the above, the burr height on the stamper side is reduced by the time the disk substrates are adhered together.

According to one embodiment of the present invention, a disk substrate conveying mechanism includes a plurality of screw shafts each including a guiding groove provided in a helical manner, which guiding grooves are configured to support an outer peripheral edge of a disk substrate molded with a die, wherein the screw shafts are axially rotated to convey the disk substrate in a conveying direction; and each of the guiding grooves includes a front side wall at a front of the guiding groove in the conveying direction, a back side wall at a back of the guiding groove in the conveying direction, and a base face that is tilted in such a manner that the guiding groove becomes deeper gradually from the front toward the back in the conveying direction.

Thus, while the disk substrate is conveyed with its stamper side on the front in the conveying direction, an outer peripheral edge A around the outer periphery of the stamper side of the disk substrate having a horizontal burr is received by a corner between the front side wall and the base face of the guiding groove of the screw shaft. Hence, similar to the above, the burr height on the stamper side is reduced by the time the disk substrates are adhered together.

Additionally, in the disk substrate conveying mechanism, the base face has an elevation difference of 100 µm or more.

Additionally, in the disk substrate conveying mechanism, the recessed part has a depth of 100 µm or more.

Additionally, in the disk substrate conveying mechanism, the base face of the guiding groove is tilted with respect to an axial direction of the screw shaft at an angle that falls in a range of 5 degrees through 65 degrees.

Thus, a sufficient space can be provided, into which a burr can enter, in such a manner that the burr is folded onto the outer peripheral edge face. Hence, it is possible to receive the horizontal burr that has been folded onto the outer peripheral edge face without causing the burr to be unfolded once again, so that the burr height on the stamper side is reliably reduced by the time the disk substrates are adhered together.

Additionally, in the disk substrate conveying mechanism, an angle between the front side wall and a plane orthogonal with respect to an axial direction of the screw shaft is smaller than an angle between the back side wall and the plane orthogonal with respect to the axial direction of the screw shaft.

Thus, the following effect is achieved. Conventionally, the width of the opening of the guiding groove is designed to be as wide as possible, while maintaining a limited substrate pitch, without extending the length of the screw shaft, and in such a manner that a disk substrate is not rubbed against the slope of the guiding groove when being inserted therein. However, according to the above embodiment of the present invention, the front side wall is tilted closer toward an upright position than the backside wall. Therefore, the opening of the guiding groove can be made wide enough by tilting the back side wall away from the upright position, without extending the length of the screw shaft. Furthermore, this configuration makes it easy for the horizontal burr to be folded toward the side opposite to the stamper side (onto the outer peripheral edge face). Hence, the burr height on the stamper side is reduced by the time the disk substrates are adhered together.

Additionally, in the disk substrate conveying mechanism, the base face of the guiding groove has a width that is greater than or equal to (a thickness of the disk substrate)+10 µm and less than or equal to (the thickness of the disk substrate)+500 µm.

Thus, the following effect is achieved. Conventionally, a disk substrate that is arranged in an upright manner is conveyed while being supported by three screw shafts that are disposed at the left side/the right side/the bottom side of the disk substrate. However, the guiding grooves of the three screw shafts are not parallel to each other. Therefore, when the disk substrate is nipped by these guiding grooves, side-runout of the substrate may occur. Nonetheless, it is difficult to precisely adjust the parallelity of the guiding grooves in units of several micrometers (µm). However, according to the above embodiment of the present invention, the width of the base face of the guiding groove is made greater than the thickness of the disk substrate to be conveyed, by several tens µm through several hundreds µm. Such a configuration prevents stress from being applied to the disk substrate when it is nipped and prevents side-runout of the substrate. Because stress is prevented from being applied to the disk substrate when it is nipped, birefringence properties at the outer peripheral edge of the substrate are prevented from being degraded.

Additionally, the disk substrate conveying mechanism further includes a heating unit configured to heat-treat the disk substrate while the disk substrate is being conveyed.

As the heating unit performs heat treatment, the substrate becomes soft. However, as described above, the horizontal burr is folded onto the outer peripheral edge face of the substrate disk. Therefore, the disk substrate can be conveyed without creating a standing burr.

According to one embodiment of the present invention, in a method of manufacturing a recording medium disk, a plurality of the disk substrates are conveyed by the disk substrate conveying mechanism described above and are laminated on each other.

Thus, a recording medium disk is provided, in which disk substrates are laminated on each other without having bubbles generated at the outer peripheral edge.

The present invention is not limited to the specifically disclosed embodiment, and variations and modifications may be made without departing from the scope of the present invention as defined by the appended claim.

The present application is based on Japanese Priority Patent Application No. 2006-309516, filed on November 15, 2006 and Japanese Priority Patent Application No. 2007-175091, filed on July 3, 2007,

## Claims

1. A disk substrate conveying mechanism comprising:
a plurality of screw shafts (3a) each comprising a guiding groove (3b) provided in a helical manner, which guiding grooves are configured to support an outer peripheral edge of a disk substrate (L0 (L1)) molded with a die, wherein:
the screw shafts are axially rotated to convey the disk substrate in a conveying direction; **characterised in that**
each of the guiding grooves comprises a front side wall at a front of the guiding groove in the conveying direction, a back side wall at a back of the guiding groove in the conveying direction, and a base face that is tilted in such a manner that the guiding groove becomes deeper gradually from the back toward the front in the conveying direction.

2. The disk substrate conveying mechanism according to claim 1, wherein:
the base face has an elevation difference of 100 µm or more.

3. A disk substrate conveying mechanism comprising:
a plurality of screw shafts (3a) each comprising a guiding groove (3b) provided in a helical manner, which guiding grooves are configured to support an outer peripheral edge of a disk substrate (L0 (L1)) molded with a die, wherein:
the screw shafts are axially rotated to convey the disk substrate in a conveying direction; **characterised in that**
each of the guiding grooves comprises a front side wall at a front of the guiding groove in the conveying direction, a back side wall at a back of the guiding groove in the conveying direction, and a base face that comprises a recessed part at a front edge of the base face in the conveying direction.

4. The disk substrate conveying mechanism according to claim 3, wherein:
the recessed part has a depth of 100 µm or more.

5. A disk substrate conveying mechanism comprising:
a plurality of screw shafts (3a) each comprising a guiding groove (3b) provided in a helical manner, which guiding grooves are configured to support an outer peripheral edge of a disk substrate (L0 (L1)) molded with a die, wherein:
the screw shafts are axially rotated to convey the disk substrate in a conveying direction; **characterised in that**
each of the guiding grooves comprises a front side wall at a front of the guiding groove in the conveying direction, a back side wall at a back of the guiding groove in the conveying direction, and a base face that is tilted in such a manner that the guiding groove becomes deeper gradually from the front toward the back in the conveying direction.

6. The disk substrate conveying mechanism according to claim 5, wherein:
the base face of the guiding groove is tilted with respect to an axial direction of the screw shaft at an angle that falls in a range of 5 degrees through 65 degrees.

7. The disk substrate conveying mechanism according to any one of claims 1, 3, and 5, wherein:
an angle between the front side wall and a plane orthogonal with respect to an axial direction of the screw shaft is smaller than an angle between the back side wall and the plane orthogonal with respect to the axial direction of the screw shaft.

8. The disk substrate conveying mechanism according to any one of claims 1, 3, and 5, wherein:
the base face of the guiding groove has a width that is greater than or equal to (a thickness of the disk substrate)+10 µm and less than or equal to (the thickness of the disk substrate)+500 µm.

9. The disk substrate conveying mechanism according to any one of claims 1, 3, and 5, further comprising:
a heating unit configured to heat-treat the disk substrate while the disk substrate is being conveyed.

10. A method of manufacturing a recording medium disk comprising the steps of:
conveying a plurality of the disk substrates (L0 (L1)) by a disk substrate conveying mechanism according to any one of claims 1, 3, and 5, and
laminating the disk substrates on each other.

## Patentansprüche

1. Fördermechanismus für ein Disksubstrat, umfassend:
eine Vielzahl von Schraubenwellen (3a), jeweils umfassend eine wendelförmig ausgestaltete Führungsrille (3b), welche Führungsrillen konfiguriert sind, eine äußere Umfangskante eines mit einem Prägewerkzeug geformten Disksubstrates (L0(L1)) abzustützen, wobei
die Schraubenwellen axial gedreht werden, um das Disksubstrat in eine Förderrichtung zu bewegen; **dadurch gekennzeichnet, dass**
jede der Führungsrillen eine in der Förderrichtung vorderseitige Wand an der vorderen Seite der Rille, eine in der Förderrichtung rückseitige Wand an der rückwärtigen Seite der Rille und eine Grundfläche umfasst, welche derart geneigt ist, dass die Führungsrille von der in der Förderrichtung rückwärtigen zur vorderen Seite allmählich tiefer wird.

2. Fördermechanismus für ein Disksubstrat gemäß Anspruch 1, wobei:
die Grundfläche eine Erhebungsdifferenz von 100 µm oder mehr hat.

3. Fördermechanismus für ein Disksubstrat umfassend:
eine Vielzahl von Schraubenwellen (3a), jeweils umfassend eine wendelförmig ausgestaltete Führungsrille (3b), welche Führungsrillen konfiguriert sind, eine äußere Umfangskante eines mit einem Prägewerkzeug geformten Disksubstrates (L0(L1)) abzustützen, wobei
die Schraubenwellen axial gedreht werden, um das Disksubstrat in eine Förderrichtung zu bewegen; **dadurch gekennzeichnet, dass**
jede der Führungsrillen eine in der Förderrichtung vorderseitige Wand an der vorderen Seite der Rille, eine in der Förderrichtung rückseitige Wand an der rückwärtigen Seite der Rille und eine Grundfläche umfasst, welche an einer in der Förderrichtung vorderen Kante der Grundfläche einen vertieften Teil umfasst.

4. Fördermechanismus für ein Disksubstrat gemäß Anspruch 3, wobei:
der vertiefte Teil eine Tiefe von 100 µm oder mehr hat.

5. Fördermechanismus für ein Disksubstrat umfassend:
eine Vielzahl von Schraubenwellen (3a), jeweils umfassend eine wendelförmig ausgestaltete Führungsrille (3b), welche Führungsrillen konfiguriert sind, eine äußere Umfangskante eines mit einem Prägewerkzeug geformten Disksubstrates (L0(L1)) abzustützen, wobei
die Schraubenwellen axial gedreht werden, um das Disksubstrat in eine Förderrichtung zu bewegen; **dadurch gekennzeichnet, dass**
jede der Führungsrillen eine in der Förderrichtung vorderseitige Wand an der vorderen Seite der Rille, eine in der Förderrichtung rückseitige Wand an der rückwärtigen Seite der Rille und eine Grundfläche umfasst, welche derart geneigt ist, dass die Führungsrille von der in der Förderrichtung vorderen zur rückwärtigen Seite allmählich tiefer wird.

6. Fördermechanismus für ein Disksubstrat gemäß Anspruch 5, wobei:
die Grundfläche der Führungsrille in Bezug auf die Axialrichtung der Schraubenwelle in einem Winkel geneigt ist, der in einem Bereich von 5 Grad bis 65 Grad liegt.

7. Fördermechanismus für ein Disksubstrat gemäß irgendeinem der Ansprüche 1, 3 und 5, wobei:
der Winkel zwischen der vorderseitigen Wand und einer Ebene orthogonal in Bezug auf die Axialrichtung der Schraubenwelle kleiner ist als der Winkel zwischen der rückseitigen Wand und der Ebene orthogonal in Bezug auf die Axialrichtung der Schraubenwelle.

8. Fördermechanismus für ein Disksubstrat gemäß irgendeinem der Ansprüche 1, 3 und 5, wobei:
die Grundfläche der Führungsrille eine Breite aufweist, die größer oder gleich (Dicke des Disksubstrats) + 10 µm und kleiner oder gleich (Dicke des Disksubstrats) + 500 µm ist.

9. Fördermechanismus für ein Disksubstrat gemäß irgendeinem der Ansprüche 1, 3 und 5, ferner umfassend:
eine Erwärmungseinheit, die konfiguriert ist, das Disksubstrat mit Wärme zu behandeln, während das Disksubstrat bewegt wird.

10. Verfahren zur Herstellung einer Aufzeichnungsmedium-Disk, umfassend die Schritte:
Fördern einer Vielzahl von Disksubstraten (L0(L1)) mittels eines Fördermechanismus für ein Disksubstrat gemäß irgendeinem der Ansprüche 1, 3 und 5, und
Aufeinanderlaminieren der Disksubstrate.

## Revendications

1. Mécanisme de convoyage de substrat de disque comprenant : une pluralité d'axes filetés (3a) chacun comprenant une rainure de guidage (3b) placée de manière hélicoïdale, lesquelles rainures de guidage sont configurées pour supporter un bord périphérique extérieur d'un substrat de disque (L0 (L1)) moulé avec une matrice, dans lequel :
les axes filetés sont mis en rotation axialement pour convoyer le substrat de disque dans une direction de convoyage ; **caractérisé en ce que**
chacune des rainures de guidage comprend une paroi latérale avant à l'avant de la rainure de guidage dans la direction de convoyage, une paroi latérale arrière à l'arrière de la rainure de guidage dans la direction de convoyage, et une face de base qui est inclinée de telle manière que la rainure de guidage devient progressivement plus profonde de l'arrière vers l'avant dans la direction de convoyage.

2. Mécanisme de convoyage de substrat de disque selon la revendication 1, dans lequel :
la face de base a une différence d'élévation de 100 µm ou plus.

3. Mécanisme de convoyage de substrat de disque comprenant :
une pluralité d'axes filetés (3a) chacun comprenant une rainure de guidage (3b) placée de manière hélicoïdale, lesquelles rainures de guidage sont configurées pour supporter un bord périphérique extérieur d'un substrat de disque (L0 (L1)) moulé avec une matrice, dans lequel :
les axes filetés sont mis en rotation axialement pour convoyer le substrat de disque dans une direction de convoyage ; **caractérisé en ce que**
chacune des rainures de guidage comprend une paroi latérale avant à l'avant de la rainure de guidage dans la direction de convoyage, une paroi latérale arrière à l'arrière de la rainure de guidage dans la direction de convoyage, et une face de base qui comprend une partie en retrait au niveau d'un bord avant de la face de base dans la direction de convoyage.

4. Mécanisme de convoyage de substrat de disque selon la revendication 3, dans lequel :
la partie en retrait a une profondeur de 100 µm ou plus.

5. Mécanisme de convoyage de substrat de disque comprenant :
une pluralité d'axes filetés (3a) chacun comprenant une rainure de guidage (3b) placée de manière hélicoïdale, lesquelles rainures de guidage sont configurées pour supporter un bord périphérique extérieur d'un substrat de disque (L0 (L1)) moulé avec une matrice, dans lequel :
les axes filetés sont mis en rotation axialement pour convoyer le substrat de disque dans une direction de convoyage ; **caractérisé en ce que**
chacune des rainures de guidage comprend une paroi latérale avant à l'avant de la rainure de guidage dans la direction de convoyage, une paroi latérale arrière à l'arrière de la rainure de guidage dans la direction de convoyage, et une face de base qui est inclinée de telle manière que la rainure de guidage devient progressivement plus profonde de l'avant vers l'arrière dans la direction de convoyage.

6. Mécanisme de convoyage de substrat de disque selon la revendication 5, dans lequel :
la face de base de la rainure de guidage est inclinée par rapport à une direction axiale de l'axe fileté à un angle situé dans une plage de 5 degrés à 65 degrés.

7. Mécanisme de convoyage de substrat de disque selon l'une quelconque des revendications 1, 3 et 5, dans lequel :
un angle entre la paroi latérale avant et un plan orthogonal à une direction axiale de l'axe fileté est supérieur à un angle entre la paroi latérale arrière et le plan orthogonal à la direction axiale de l'axe fileté.

8. Mécanisme de convoyage de substrat de disque selon l'une quelconque des revendications 1, 3 et 5, dans lequel :
la face de base de la rainure de guidage a une largeur qui est supérieure ou égale à (une épaisseur du substrat de disque) + 10 µm et inférieure ou égale à (une épaisseur du substrat de disque) + 500 µm.

9. Mécanisme de convoyage de substrat de disque selon l'une quelconque des revendications 1, 3 et 5, comprenant en outre :
une unité de chauffage configurée pour traiter thermiquement le substrat de disque quand le substrat de disque est convoyé.

10. Procédé de fabrication d'un disque de support d'enregistrement comprenant les étapes consistant à :
convoyer une pluralité de substrats de disques (L0 (L1)) par un mécanisme de convoyage de substrat de disque selon l'une quelconque des revendications 1, 3, et 5, et
empiler les substrats de disque les uns sur les autres.
